# EUROPÄISCHE PATENTSCHRIFT

(11) **EP 2 624 966 B1**
(45) Veröffentlichungstag und Bekanntmachung des Hinweises auf die Patenterteilung: **18.05.2016**
(21) Anmeldenummer: 11776087.6
(22) Anmeldetag: 07.10.2011
(51) Int. Cl.: B05B 13/06, B05B 9/04, B65H 51/10, B65H 75/44, F28F 19/04

(54) **VORRICHTUNG ZUR INNENBEHANDLUNG VON ROHREN**
APPARATUS FOR TREATING THE INSIDE OF PIPES
APPAREIL POUR LE TRAITEMENT INTERNE DES TUYAUX

(30) Priorität: 07.10.2010 DE 102010047589
(43) Veröffentlichungstag der Anmeldung: 14.08.2013
(73) Patentinhaber: XERVON Plastocor GmbH, 45883 Gelsenkirchen (DE)
(72) Erfinder: KREISELMAIER, Richard, CH-3974 Venthone (CH)
(74) Vertreter: Thiel, Christian
(86) Internationale Anmeldenummer: PCT/EP2011/005009
(87) Internationale Veröffentlichungsnummer: WO 2012/045466

(56) Entgegenhaltungen:
- WO-A1-97/19758
- US-A- 4 795 108
- US-A1- 2005 087 644

## Beschreibung

Die Erfindung betrifft eine Vorrichtung zur Innenbehandlung von Rohren, insbesondere von Kühlmittelrohren von Dampfkondensatoren und Wärmetauschern, mit einer Versorgungseinheit (V) zur Heranführung und Weiterleitung von Behandlungsmaterial, eine Applikationseinheit (A) zur Applikation des von der Versorgungseinheit herangeführten Behandlungsmaterials sowie eine Steuereinheit zur Überwachung und Steuerung der Versorgung mit Behandlungsmaterial und der Ausbringung des Behandlungsmaterials auf Rohrinnenwandungen, wobei die Applikationseinheit (A) einen Führungsschlauch mit einem in dem Führungsschlauch geführten und in das zu behandelnde Rohr einführbaren Applikationsschlauch aufweist, der in einer Düse endet.

Es ist bekannt, Dampfkondensatoren, wie sie beispielsweise in Anlagen zur Erzeugung elektrischer Energie eingesetzt werden, aber auch in anderen industriellen Bereichen, mit einer Kunststoffbeschichtung zu versehen, um Korrosionserscheinungen, insbesondere auch Erosionen, entgegenzuwirken.

Rohrböden und die davon ausgehenden Kühlmittelrohre in Anlagen zur Erzeugung elektrischer Energie sind einer Vielzahl von äußeren Einflüssen ausgesetzt, insbesondere mechanischen, chemischen und elektrochemischen Beanspruchungen.

Mechanische Beanspruchungen treten auf durch vom Kühlmittel mitgerissene feste Partikel, beispielsweise Sand. Außerdem treten durch die Temperaturdifferenz zwischen dem Kühlmedium und dem zu kondensierenden Dampf, die 100°C übersteigen können, Wärmespannungen auf, die insbesondere im Einwalzbereich der Kühlmittelrohre zu mechanischer Beanspruchung führen.

Chemische Beanspruchungen ergeben sich aus der Natur des Kühlmediums, beispielsweise aus dessen Befrachtung mit Salzen, basischen oder sauren Substanzen. Insbesondere wäre hier die bekannte Korrosionswirkung von zu Kühlzwecken verwandtem Meerwasser oder stark belastetem Flusswasser zu nennen.

Unter elektrochemischer oder galvanischer Korrosion ist diejenige zu verstehen, die durch die Ausbildung von galvanischen Elementen an metallischen Grenzflächen, insbesondere an den Übergängen von Rohrboden zu Kühlmittelrohr, auftreten und die durch elektrisch leitende Flüssigkeiten, etwa Meer- oder salzhaltigem Flusswasser stark gefördert werden.

Hinzu kommen Beeinträchtigungen der Funktionsfähigkeiten von Dampfkondensatoren zur Ablagerung unerwünschter Stoffe, Algenbildung, etc, die insbesondere durch Rauhigkeiten gefördert werden, wie sie durch Korrosionserscheinungen entstehen. Dies hat zur Folge, dass sich die Korrosions- und Ablagerungserscheinungen mit der Betriebsdauer eines Dampfkondensators beschleunigen und gegenseitig hochschaukeln, weil sich zunehmend Ansatzpunkte für Korrosion und Ablagerungen ergeben.

Schon frühzeitig ist man deshalb dazu übergegangen, Dampfkondensatoren mit einer korrosionsmindernden Beschichtung aus Kunststoffmaterialien zu versehen. Insbesondere werden hier Beschichtungen auf Basis von Epoxidharzen eingesetzt.

Zunächst wurden überwiegend nur die Rohrböden selbst beschichtet, was aber nicht die speziell mit der Ausbildung von Korrosionserscheinungen und Ablagerungen in den Rohren verbundenen Probleme löst. Später wurden dann auch die Rohrein- und Auslässe in die Beschichtung einbezogen, um den besonders gefährdeten Übergangsbereich zu schützen. Maßnahmen der vorstehend genannten Art sind beispielsweise aus DE 1 939 665 U, DE 7 702 562 U, EP 0 236 388 A sowie EP 0 679 853 A1 bekannt.

Es hat sich aber gezeigt, dass nur eine weitgehende vollständige Beschichtung auch des Kühlmittelrohrs einen wirksamen und lang andauernden Korrosionsschutz sicherstellen kann. Die Innenbeschichtung von solchen Kühlmittelrohren stellt aber wegen ihrer teilweise erheblichen Länge und wegen des geringen Durchmessers ein großes Problem dar, insbesondere wenn man berücksichtigt, dass die Beschichtung möglichst gleichförmig ausfallen muss. Zugleich muss die Beschichtung vor Ort und in möglichst kurzem Zeitraum erstellt werden können um den Anlagenstillstand kurz zu gestalten. Angesichts der großen Zahl von Kühlmittelrohren in Dampfkondensatoren, die mehrere tausend Rohre umfassen, bedeutet dies, dass das Beschichtungsverfahren weitgehend automatisiert und standardisiert werden muss.

Hinzu kommt die Notwendigkeit, Kühlmittelrohre vor der Beschichtung von altem Beschichtungsmaterial, anhaftenden Anlagerungen und Rost zu befreien. In herkömmlicher Weise geschieht dies durch Strahlen mit einem abrasiven Strahlenmittel, beispielsweise mit Sand, der über eine Dralldüse in Rotation versetzt wird. Es entstehen große Mengen an kontaminiertem Strahlsand, die teuer entsorgt werden müssen.

Bekannt ist eine Vorrichtung zur Innenbeschichtung von Rohren gemäß WO 97/19758 A, die die eingangs genannten Merkmale aufweist. Diese Vorrichtung hat sich an und für sich bewährt, ist aber bezüglich der Technik und Präzision bei der Aufbringung des Beschichtungsmittels verbesserungsfähig. Insbesondere neigt die bekannte Vorrichtung bei hoher Beanspruchung dazu, den Applikationsschlauch ungleichmäßig auszufahren.

Ferner wäre es wünschenswert, das Beschichtungsmittel mit einer konstanten Temperatur zu fahren, die im Bereich von 20 bis 40°C liegt. Eine solche Temperatur kann im Winter, in geschlossenen Räumen bei längerer Arbeitszeit und in südlichen Ländern häufig nicht eingehalten werden, was zu Qualitätsminderungen bei der Beschichtung führt - die Beschichtungsmasse härtet zu langsam oder zu schnell aus und verliert dadurch an Schutzwirkung und/oder Elastizität.

Schließlich wäre es wünschenswert, eine Vorrichtung bereitzustellen, mit der die zu beschichtenden Rohre zuvor auch gereinigt und von Anhaftungen, auch früheren Beschichtungen, befreit werden können.

Diese Aufgabe wird mit einer Vorrichtung der eingangs genannten Art gelöst, bei der der Applikationsschlauch einlagig auf eine angetriebene Trommel aufwickelbar und über Spanngurte auf der Trommel sicherbar ist, der Applikationsschlauch über auf einem Fahrschlitten angeordnete Führungsrollen vor- und rückfahrbar ist, die Führungsrollen einen Antrieb aufweisen, der mit dem Antrieb der Trommel synchronisiert ist und der Fahrschlitten parallel zur Trommelachse in Abhängigkeit vom Ausfahrzustand des Applikatiosschlauches verfahrbar ist.

Die erfindungsgemäße Vorrichtung ist besonders für eine schnelle, gleichmäßige und weitgehend standardisierte Innenbeschichtung von Kühlmittelrohren ausgelegt. Erfindungsgemäß ist es aber auch möglich, die Rohre zu reinigen und die dadurch vorbereiteten Rohre mit einer Kunststoffbeschichtung zu versehen, wobei bei Rohrlängen von mehreren Metern Beschichtungszeiten pro Rohr von einer Minute ohne Weiteres möglich sind. Es ist auch ohne Weiteres möglich, Rohre nur teilweise, beispielsweise in den Endbereichen zu beschichten oder auch mehrere Schichten unterschiedlichen Materials, beispielsweise in Form einer Grundierung, einer Hauptschicht und einer Deckschicht, aufzubringen.

Zweckmäßigerweise ist der Applikationsschlauch durch den Führungsschlauch über seine gesamte Länge und damit auch die gesamte Länge des zu beschichtenden Rohrs mit vorgegebener Geschwindigkeit aus- und rückfahrbar. Für Hochdruckapplikationen, insbesondere bei der Innenreinigung von Rohren mit druckbeaufschlagtem Wasser sollte der Schlauch eine Druckfestigkeit von bis zu 2.500 bar aufweisen; für Beschichtungszwecke allein ist in der Regel eine Druckfestigkeit von bis zu 500 bar ausreichen. Ohnehin ist eine hinreichende Steifigkeit erforderlich, um die Ausfahrbarkeit in das zu beschichtende Rohr zu gewährleisten, die bei druckfesten Schläuchen in der Regel gegeben ist. Die Druckfestigkeit kann in der Regel durch Schläuche mit textiler oder metallischer Gewebeverstärkung erzielt werden.

Der Applikationsschlauch, über den das Reinigungsmittel wie auch das Beschichtungsmittel in das zu beschichtende Rohr geführt wird, ist einlagig auf eine angetriebene Trommel der Vorrichtung aufgewickelt und über Spanngurte auf der Trommel gesichert. Für die Aufwickelung weist die Trommel zweckmäßigerweise eine eingearbeitete Schlauchführung in Form von Rillen oder gerundeten Profilen auf, die die einzelnen Schlauchwindungen sicher aufnimmt und Überlagerungen verhindert. Dem gleichen Zweck dient der Spanngurt. Da der Vorschub und der Einzug des Applikationsschlauchs geregelt und steuerbar erfolgen muss, ist eine präzise Wickelung unerlässlich. Der Schlauchvorschub bestimmt sich insbesondere aus der Zahl der Drehungen der Trommel.

Die Spanngurte dienen der Festlegung der Schlauchwindungen auf der Trommel in parallelen Windungen. Vorzugsweise handelt es sich bei den Spanngurten um solche, die über Rollen beweglich geführt sind. An den Endpunkten der Spanngurte werden diese über Rollen umgelenkt und zurückgeführt. Die Spanngurte sind beweglich und werden durch die Reibung im Kontakt mit dem Schlauch auf der Trommel angetrieben. Vorzugsweise umspannen die Spanngurte wenigstens 270° der Trommel, insbesondere wenigstens 300°.

Der Applikationsschlauch wird über auf einem Fahrschlitten angeordnete und angetriebene Führungsrollen vor- und zurückgefahren. Bei Abwicklung von der Trommel passiert der Applikationsschlauch eine Antriebseinheit mit mehreren oben und unten sowie hintereinander angeordneten Rollen, die einen präzisen Vortrieb erlauben. Die Führungsrollen werden durch einen separaten Motor, vorzugsweise einen Servomotor angetrieben, der mit dem Antrieb der Trommel synchronisiert ist. Dies erlaubt es, den Applikationsschlauch präzise vor- und zurückzufahren und liefert genügend Druck, um den Applikationsschlauch auch bis 20 Meter, und mehr in ein Kühlrohr hinein zufahren.

Spanngurte und eigener Antrieb der Führungsrollen, wobei letzterer auf den Trommelantrieb abgestimmt ist, sind essentiell für eine präzise und reproduzierbare Arbeitsweise des Applikationsschlauches.

Zweckmäßigerweise befindet sich am Fahrschlitten auch eine Messrolle zur Kontrolle der Bewegung und ggf. auch Geschwindigkeit des Applikationsschlauchs.

Der Fahrschlitten ist parallel zur Trommelachse verfahrbar und wird in Abhängigkeit vom Ausfahrzustand des Applikationsschlauches verfahren. Da sich der Applikationsschlauch auf der Trommel in parallel liegenden Windungen befindet, verschiebt sich der Ablösepunkt von der Trommel parallel zur Trommelachse über die gesamte Trommelweite. Der Führungsschlitten wird nachgeführt, so dass der Applikationsschlauch nach Verlassen der Trommel immer in etwa im rechten Winkel zur Trommelachse in den Rollenantrieb des Führungsschlittens eintritt. Auch diese Maßnahme ist wichtig für die Präzision des Beschichtungsvorgangs und für die Zuverlässigkeit der Anlage.

Der Führungsschlauch ist unmittelbar am Fahrschlitten angeordnet und zwar an der der Trommel abgewandten Seite des Rollenantriebs. Er hat eine hinreichende Länge, um die Entfernung zwischen Vorrichtung und Rohr, die unter Umständen mehrere Meter betragen kann, zu überbrücken. Der Applikationsschlauch kann eine Länge von bis zu 30 m aufweisen.

Um die Beschichtung gleichmäßig auszulegen, kann die Trommel über eine Temperierung verfügen. Diese dient dazu, das über die Trommel in den Applikationsschlauch eingeführte Behandlungsmittel auf eine zuträgliche Temperatur zu bringen, beispielsweise das Beschichtungsmittel, eine aushärtende Kunststoffmischung auf Basis eines Epoxidharzes, auf eine Standardtemperatur von 20 bis 40°C. Wird die Vorrichtung zur Reinigung von Rohren eingesetzt, kann bei tiefen Temperaturen eine Aufwärmung erforderlich sein, um die Vereisung zu verhindern. Vorzugsweise erfolgt die Temperierung über eine Versorgung mit Heizwasser oder Kühlwasser.

Es ist zweckmäßig, die erfindungsgemäße Vorrichtung so auszulegen, dass sowohl die Reinigung eines Rohrs wie auch die Beschichtung mit einer Kunststoffschicht im Rückfahrbetrieb erfolgt. Hierzu wird der Behandlungsschlauch in das zu behandelnde Rohr bis zum Ende eingeführt und die jeweilige Maßnahme bei Erreichen des Rohrendes ausgelöst und bei Erreichen des Rohranfangs abgebrochen. Es versteht sich, dass bei der Reinigung spezielle für die Reinigung geeignete Düsen eingesetzt werden, bei der Beschichtung Düsen, die speziell auf die Beschichtungseignung ausgelegt sind. Solche Düsen sind an und für sich bekannt.

Vorzugsweise strahlen die Düsen das Behandlungsmittel in etwa einem rechten Winkel zur Längsrichtung des Rohres kreisförmig ab. Im Allgemeinen sind Spritzwinkel von 60 bis 120° zur Längsrichtung des Rohres angebracht.

Vorzugsweise befindet sich im Applikationsschlauch, insbesondere unmittelbar in der Nähe der Spritzdüse, ein Feinfilter, um ein Verstopfen der Düse durch Partikel zu vermeiden, sowie ein Rückschlagventil, das den Materialfluss ohne große Verzögerung unterbricht, um ein Nachfließen von Beschichtungsmaterial nach Beendigung der Applikation von Beschichtungsmaterial zu vermeiden. Das Rückschlag- oder Endventil wird beispielsweise bei einem Druck von 10 bar aktiviert.

Im Bereich der Versorgungseinrichtung befindet sich in einem Ansaugstutzen oder -schlauch zweckmäßigerweise ein Grobfilter, mit dem das aus einem Vorratsbehälter angesaugte Beschichtungsmaterial frei von groben Partikeln angefördert wird. Die Förderpumpe ist zweckmäßigerweise eine gegendruckabhängige Kolbenpumpe, die eine Materialförderung sicherstellt, solange Spritzmaterial abgegeben wird. Mit der Kolbenpumpe wird gleichzeitig der für den Betrieb der Vorrichtung nötige Applikationsdruck aufgebaut.

Im weiteren Verlauf des Materialtransports von der Förderpumpe zur Spritzdüse befindet sich zweckmäßigerweise ein Rückschlagventil zusammen mit einer Doppelschaltfiltereinrichtung zur weiteren Filterung des Beschichtungsmaterials. Hierbei sind zwei Filtereinrichtungen parallel geschaltet und mit einer Druckdifferenzüberwachung versehen, die als Verschmutzungsanzeige dienen kann. Die Druckdifferenzüberwachung erfolgt über die Steuereinheit, die zweckmäßigerweise auch die Werte anzeigt und anhand einer Messzelle den Materialfluss überwacht und die Schaltung der Filter regelt. Der Materialfluss kann somit über lange Zeit gewährleistet werden und ein Zusetzen der Filter so frühzeitig entdeckt und angezeigt werden, dass ein Beschichtungsvorgang geordnet zu Ende gebracht werden kann und nicht vorzeitig abgebrochen werden muss.

Zwei Steuerventile mit einer Absicherung von 200 bar sorgen für einen geregelten Materialfluss.

Von der Versorgungseinheit mit den Filtereinheiten und der Messzelle führt die Materialversorgung über einen druckfesten Schlauch direkt zur Applikationseinheit, in der sich der Applikationsschlauch auf einer Trommel aufgewickelt befindet. Die Trommel ist über einen Elektromotor betreibbar, der wiederum von der Steuereinheit geregelt wird. Je nach Betriebszustand wird der Applikationsschlauch von der Trommel ab- bzw. auf die Trommel aufgewickelt, wobei er erst nach Passieren der Antriebsrollen auf dem Fahrschlitten in den Führungsschlauch eintritt.

Als dritte Einheit verfügt die erfindungsgemäße Vorrichtung über eine Steuereinheit, mit der insbesondere die Ansaug-/Abgabemenge und der Druck überwacht, gesteuert und angezeigt werden. Die Steuereinheit sorgt für die Funktionsfähigkeit der Anlage und einen reibungsfreien Betrieb. Sie ist ferner hinsichtlich Vorschublänge, Vorschubgeschwindigkeit und Rückfahrgeschwindigkeit des Applikationsschlauches programmierbar, des Weiteren hinsichtlich Spritzgeschwindigkeit und Abgabemenge. Insbesondere die Möglichkeit, die Vorschublänge des Applikationsschlauches und seine Rückfahrgeschwindigkeit in Kombination mit der Abgabe des Behandlungsmittels zu programmieren ermöglicht es, große Zahlen an Kühlmittelrohren auf standardisierte Art und Weise schnell und zuverlässig zu behandeln. Als Behandlungsmittel kommen insbesondere Wasser oder ein anderes flüssiges Reinigungsmedium zur Reinigung der Rohre sowie ein aushärtendes Kunststoffmaterial zur Beschichtung der Rohre in Frage.

Die erfindungsgemäße Vorrichtung ist vorzugsweise fahrbar ausgelegt, so dass sie am Einsatzort einfach bewegt und in Position gebracht werden kann. Dabei ist es zweckmäßig, die Steuer- und die Versorgungseinheit zu einer Fahreinheit zusammenzufassen, die über einen druckfesten Versorgungsschlauch mit der Applikationseinheit und ggf. einer Kabelverbindung für die Handsteuerung in Verbindung steht. Der Versorgungsschlauch zwischen Steuer-/Versorgungseinheit und Applikationseinheit kann dabei eine beliebige Länge aufweisen. Dies ermöglicht es, die relativ empfindliche Steuer-/Versorgungseinheit weiter entfernt von der Applikationseinheit zu betreiben, was aus Platzgründen, aber zur Schonung der empfindlichen Anlagenteile zweckmäßig sein kann.

Wie dargestellt, erfolgt die Steuerung der erfindungsgemäßen Vorrichtung über eine Steuereinheit. Start und Ende der einzelnen Behandlungsschritte, d.h. das Ausfahren des Applikationsschlauchs und das Positionieren der Düse, das Rückfahren des Applikationsschlauchs in Betrieb unter Versprühen entweder von Druckwasser oder Beschichtungsmittel wie auch der Abbruch der Behandlung werden über die Handsteuerung vorgenommen.

Es ist ferner zweckmäßig, die Anlage mit einer Notabschaltung zu versehen, die es dem Benutzer erlaubt, alle Vorgänge über einen Notschaltknopf zu beenden. Ferner ist es sinnvoll, eine Zwangsabschaltung vorzusehen, die bei Unter- oder Überschreiben der vorgesehenen Ausbringmenge, des eingestellten Drucks oder bei Abweichung von der programmierten Fahrgeschwindigkeit wirksam wird. Bei der Hochdruckreinigung eines Rohrs mit Wasser im Bereich von etwa 2.000 bar führt ein Stillstand der Düse über ein bis zwei Minuten zur Durchtrennung des Rohres am Stillstandsort.

Die erfindungsgemäße Vorrichtung findet insbesondere bei der Reinigung und/oder Beschichtung der Innenwandung von Kühlmittelrohren und industriellen Versorgungsrohren Anwendung. Dabei können auch Rohre mit kleinem Durchmesser, etwa einem Durchmesser von 10 mm oder weniger, ohne Weiteres bedient werden. Bei der Verwendung zur Innenreinigung wird insbesondere Wasser mit einem Druck von 1.500 bis 2.500 bar als Reinigungsmedium über eine zu den Seiten hin ringförmig abstrahlende Düse verwandt, wobei der Winkel 60 bis 120° zur Längsrichtung des Rohrs beträgt, vorzugsweise aber im rechten Winkel abgestrahlt wird. Die gleiche Vorrichtung kann anschließend oder alternativ zur Innenbeschichtung von Rohren mit einem aushärtenden Kunststoff eingesetzt werden. Es versteht sich, dass für den Reinigungsvorgang einerseits und für den Beschichtungsvorgang andererseits dafür jeweils speziell geeignete Düsen verwandt werden, die an und für sich bekannt sind. Bei dem Beschichtungsverfahren wird das Beschichtungsmittel im Allgemeinen mit einem Druck von maximal 250 bar verspritzt.

Die Erfindung wird durch die beiliegenden Abbildungen näher erläutert. Von diesen zeigt:
- Figur 1: den Schaltplan der Versorgungseinheit für die Materialzufuhr;
- Figur 2: die Applikationseinheit in seitlicher Ansicht;
- Figur 3: die Applikationseinheit in Frontalansicht und
- Figur 4: die Rollenhalterung der Spanngurte.

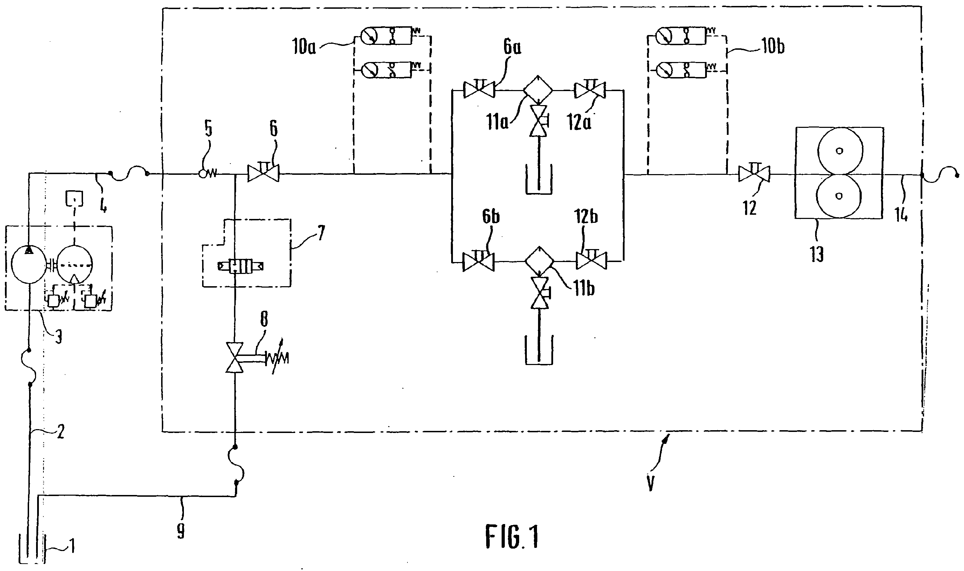

Figur 1 zeigt die Versorgungseinheit mit einem Ansaugschlauch 2, der da zu fördernde Beschichtungsmaterial aus einem Vorlagegefäß 1 mittels Pumpe 3 ansaugt. Der Schlauch 2 muss nicht druckbeständig sein und hat beispielsweise einen Durchmesser von 19 mm.

Bei der Pumpe 3 handelt es sich zweckmäßigerweise um eine druckluftbetriebene doppelt wirkende Kolbenpumpe, mit der sowohl Material angesaugt als auch unter Druck abgegeben werden kann. Die Pumpe arbeitet gegendruckabhängig selbsttätig, d. h. die Materialförderung erfolgt nur, wenn Spritzmaterial abgegeben oder entnommen wird, etwa beim Auslösen des Beschichtungsvorgangs. Eine Förderleistung von beispielsweise 27 l/min bei 0 bar ist ausreichend, einen Druck von bis zum 500 bar ohne Weiteres zu erzielen.

Von der Kolbenpumpe wird das geförderte Material über eine druckfeste Leitung 4 mit beispielsweise einem Durchmesser von 10 mm über ein Rückschlagventil 5 und einen Kugelhahn 6 einer Doppelfiltereinheit 11a/11b zugeführt. Zwischen dem Rückschlagventil 5 und dem Kugelhahn 6 befindet sich eine Rückleitung 9, die über einen pneumatischen Kugelhahn 7 und eine Rückdruckregelgruppe 8 mit einem Druckregler in die Materialvorlage zurückführt.

Die Doppelfiltereinheit 11 a/11 b ist von zwei Drucksensoren 10a/10b eingerahmt, die eine Druckdifferenzüberwachung über die zentrale Steuereinheit ermöglichen. Die Druckdifferenzüberwachung ist regulär als Verschmutzungsanzeige der Filter gedacht, so dass beim Zusetzen eines Filters rechtzeitig auf den anderen umgeschaltet werden kann und auch frühzeitig Maßnahmen zu einer geordneten Beendigung eines Beschichtungsvorgangs getroffen werden können. Ein problemloser Austausch der Filtereinheiten ist durch Betätigung der Kugelhähne 6a/12a und 6b/12b möglich. Eine handelsübliche Messzelle 13, beispielsweise eine Zahnradmesszelle oder eine Ultraschallmesszelle, erlaubt die zuverlässige Überwachung und Darstellung des Materialflusses in der zentralen Steuereinheit, die durch Auswertung der Differenzdruckmessung, der Messwerte der Messzelle und der Förderleistung der Pumpe 3 die zur Steuerung des Beschichtungsvorgangs nötigen Daten erhält.

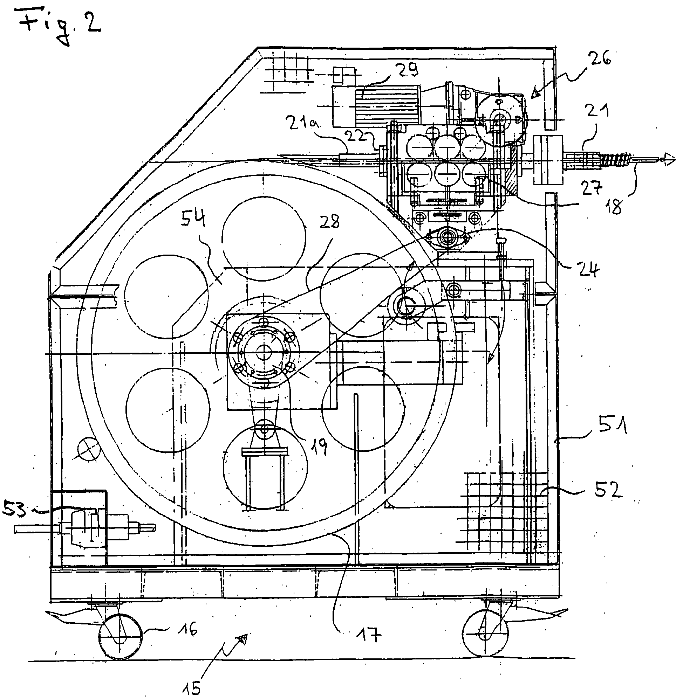

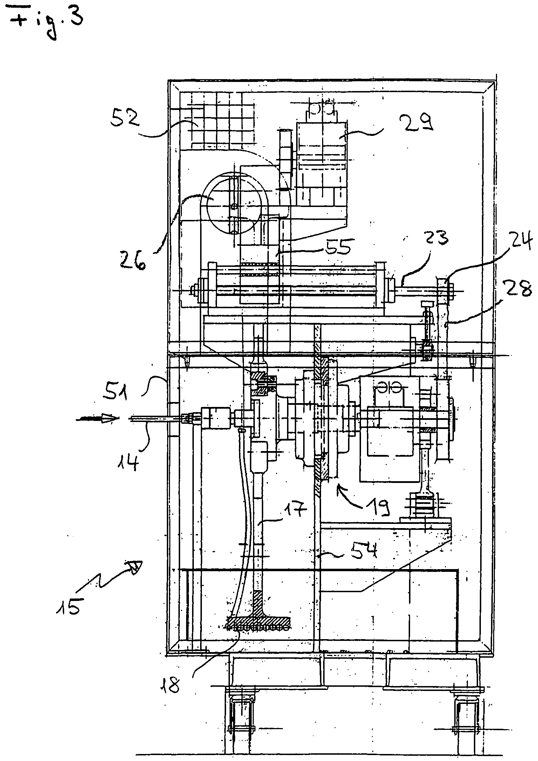

Von der Messzelle 13 gelangt das geförderte Material über die Leitung 14 zur Applikationseinheit A gemäß Figur 2 und 3.

Die Applikationseinheit A ist auf einem mit Rollen 16 versehenen Untersatz 15 angeordnet, der eine darauf gelagerte Trommel 17 aufweist. Die Trommel 17 nimmt den Applikationsschlauch 18 auf, der mit Hilfe eines Motors 19 auf- und abgewickelt werden kann. Die Materialversorgung erfolgt über den Zuführstutzen 20, an dem der Schlauch 14 der Versorgungseinrichtung V angeschlossen ist. Von dem Anschlussstutzen 20 gelangt das Material über eine Drehdurchführung in den Applikationsschlauch 18 und von dort weiter zur Applikationsdüse (nicht dargestellt).

Der fahrbare Untersatz 15 weist einen Rahmen 51 auf, der, soweit erforderlich, mit einem Welldrahtgitter 52 verkleidet ist. Eine Kraftstromversorgung ist mit 53 gekennzeichnet. Die Trommel 17 an einem Halteelement 54 gelagert.

Der Applikationsschlauch 18 wird von der Trommel 17 durch einen Führungsschlauch 21a geführt. Der Führungsschlauch 21a befindet sich an einem Ansatz 22 im oberen Bereich der Trommel 17, der mittels eines Fahrschlittens 55 an einer feststehenden Führungseinrichtung 23 verfahren wird, so dass er beim Auf- und Abwickeln des Applikationsschlauches 18 den Wicklungen des Applikationsschlauches 18 auf der Trommel 17 in horizontaler Richtung folgen kann. Der Antrieb 24 des Fahrschlittens ist mit dem Motor 19 gekoppelt, und zwar über einen Zahnriemen 28, so dass der Fahrschlitten 25 mit dem Führungsschlauchansatz 22 synchron zum Ab- und Aufwicklungsvorgang verfahren werden kann. Der Ab- bzw. Aufwicklungsvorgang kann durch Endschalter, die sich an den Enden der Führungseinrichtung 23 befinden, beendet werden.

Der Applikationsschlauch 18 wird von der Trommel in den Führungsschlauch 21 a geführt. Der Führungsschlauch 21 ist unterteilt, in der Unterteilung befindet sich die Antriebseinheit 26 für den Applikationsschlauch 18, die insgesamt 6 Führungs- und Antriebsrollen 27 aufweist. Die Antriebseinheit 26 ist auf dem Fahrschlitten 55 verfahrbar und folgt den Wicklungen des Applikationsschlauchs 18 auf der Trommel 17. Der Antrieb 24 des Führungsschlittens 55 erfolgt über einen Zahnriemen 28, der vom Trommelmotor 19 angetrieben wird und damit den synchronen Lauf des Führungsschlittens über eine Trapezgewindespindel gewährleistet. Die Rollen 27 des Applikationsschlauchsantriebs werden über einen mit dem Trommelmotor 19 gekoppelten Servomotor 29 bewegt, so dass auch hier ein synchroner Vortrieb des Applikationsschlauchs zur Abwicklung von der Trommel 17 gewährleistet ist. Es werden maximale Vortriebs-/Rückholgeschwindigkeiten von bis zu 4,5 m/sec erreicht.

Der Applikationsschlauch 18 weist an seinem Ende eine Düse auf, mit der zum einen Beschichtungsmittel auf die Innenseite eines gereinigten Rohr aufgebracht werden kann, zum anderen aber auch das Rohr mit hohem Druck innen gestrahlt werden kann, wenn die Applikationseinheit A mit Reinigungsmittel beaufschlagt wird. Im Allgemeinen handelt es sich dabei um Wasser, das mit hohem Druck, bis zu 2.500 Bar, auf die Rohrinnenwände appliziert wird.

Die Trommel 17 kann mit einer Heiz- oder Kühlwasserversorgung ausgestattet sein, um Beschichtungsmittel auf seinem Weg durch den Schlauch auf eine für die Applikation brauchbare Temperatur aufzuheizen oder abzukühlen. Die Applikationsvorrichtung kann aber auch zu diesem Zweck eine separate Heiz- oder Kühlschlange aufweisen, die der Trommel vorgeschaltet ist.

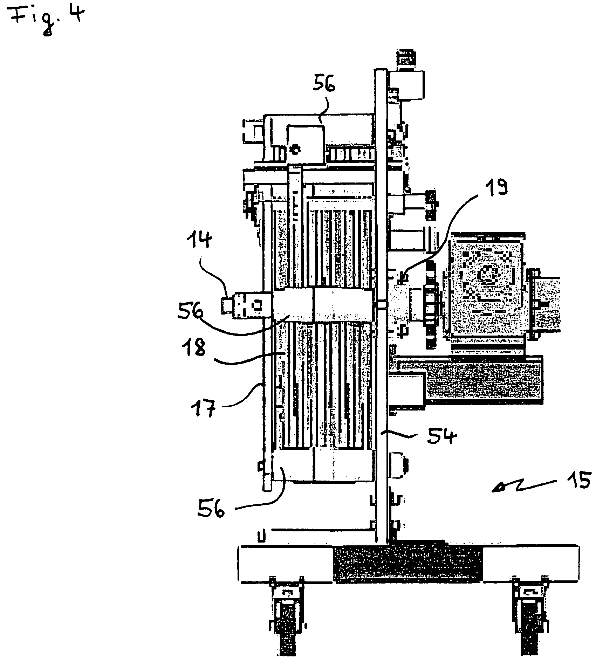

Figur 4 zeigt eine Darstellung der Applikationseinheit A mit dem Untersatz 15, der Halterung 54 für die Trommel 17 und den Motor 19, den auf die Trommel 17 aufgewickelten Applikationsschlauch 18 und drei Rollen 56, die die Halterung für die Spanngurte darstellen.

Die Spanngurte umgeben die Trommel 17 zweckmäßigerweise über 270° des Umfangs, wobei der Teil der Trommel, der den Applikationsschlauch 18 an die Antriebseinheit 26 für den Applikationsschlauch 18 freigibt, frei bleibt. Wenigstens eine der Rollen 56 für die Spanngurte ist beweglich angeordnet, so dass die um die Rollen geführten Spanngurte nachgespannt werden können.

Die Rollen 56 verteilen sich gleichmäßig über den Umfang der Trommel, zweckmäßigerweise im Abstand von 90° über den Umfang. Darüber und herum geführt ist ein Band aus einem elastischen Material, etwa Gummi oder einem Kunststoff, das zwischen den Halterollen 56 eng auf den aufgewickelten Führungsschlauch 18 aufliegt und diesen auf der Trommel in den in der Trommel eingelassenen Führungsrillen hält. Der - oder ggf. auch die - Spanngurte laufen über die beweglichen Rollen und rotieren mit der Schlauchtrommel 17, sobald diese in Bewegung gerät, mit. Die Antriebsenergie wird über die Trommel bereitgestellt. Der Applikationsschlauch hat bei richtig gespannten Spanngurten keine Möglichkeit zum Ausweichen und wird stets korrekt in den auf der Trommel angeordneten Führungsrillen gelagert. Die Spanngurte sind wichtig für ein präzises und reibungsloses Ab- und Aufwickeln des Führungsschlauches.

## Patentansprüche

1. Vorrichtung zur Innenbehandlung von Rohren, insbesondere von Kühlmittelrohren von Dampfkondensatoren und Wärmetauschern, mit einer Versorgungseinheit (V) zur Heranführung und Weiterleitung von Behandlungsmaterial, eine Applikationseinheit (A) zur Applikation des von der Versorgungseinheit herangeführten Behandlungsmaterials sowie eine Steuereinheit zur Überwachung und Steuerung der Versorgung mit Behandlungsmaterial und der Ausbringung des Behandlungsmaterials auf Rohrinnenwandungen, wobei die Applikationseinheit (A) einen Führungsschlauch (21) mit einem in dem Führungsschlauch (21) geführten und in das zu behandelnde Rohr einführbaren Applikationsschlauch (18) aufweist, der in einer Düse endet, **dadurch gekennzeichnet, dass** der Applikationsschlauch (18) einlagig auf eine angetriebene Trommel (17) aufwickelbar und über Spanngurte auf der Trommel (17) sicherbar ist, über auf einem Fahrschlitten (55) angeordnete Führungsrollen (27) vor- und rückfahrbar ist, die Führungsrollen (27) einen Antrieb (19) aufweisen, der mit dem Antrieb (19) der Trommel (17) synchronisiert ist und der Fahrschlitten (55) parallel zur Trommelachse in Abhängigkeit vom Ausfahrzustand des Applikationsschlauches (18) verfahrbar ist.

2. Vorrichtung nach Anspruch 1, **dadurch gekennzeichnet, dass** die Trommel (17) auf eine Standardtemperatur temperierbar ausgelegt ist.

3. Vorrichtung nach Anspruch 2, **dadurch gekennzeichnet, dass** die Trommel (17) mit einer Heiz-/Kühlwasserversorgung ausgestattet ist.

4. Vorrichtung nach einem der Ansprüche 1 bis 3, **dadurch gekennzeichnet, dass** die Trommel (17) eine Führung für den Applikationsschlauch (18) aufweist.

5. Vorrichtung nach einem der vorstehenden Ansprüche, **dadurch gekennzeichnet, dass** die Spanngurte über Rollen (56) beweglich geführt sind.

6. Vorrichtung nach Anspruch 5, **dadurch gekennzeichnet, dass** die Spanngurte über Reibung des Applikationsschlauchs (18) bei sich drehender Trommel (17) bewegbar sind.

7. Vorrichtung nach einem der vorstehenden Ansprüche, **dadurch gekennzeichnet, dass** die Spanngurte mehr als 270° des Trommelumfangs abdecken.

8. Vorrichtung nach einem der vorstehenden Ansprüche, **dadurch gekennzeichnet, dass** der Applikationsschlauch (18) ein Hochdruckschlauch mit einer Druckfestigkeit bis 2.500 bar ist.

9. Vorrichtung nach einem der vorstehenden Ansprüche, **dadurch gekennzeichnet, dass** der Applikationsschlauch (18) über die gesamte Länge des zu behandelnden Rohrs gesteuert aus- und rückfahrbar ist.

10. Vorrichtung nach einem der vorstehenden Ansprüche, **dadurch gekennzeichnet, dass** der Applikationsschlauch (18) eine Beschichtungsdüse aufweist, die für die Applikation im Rückfahrbetrieb ausgelegt ist, wobei der Spritzwinkel 60° bis 120° zur Längsrichtung des zu behandelnden Rohrs beträgt.

11. Vorrichtung nach einem der vorstehenden Ansprüche, **dadurch gekennzeichnet, dass** die Versorgungseinrichtung (V) einen mit einem Grobfilter versehenen Ansaugschlauch (2) aufweist, der mit einer Gegendruck abhängig arbeitenden Förderpumpe (3) verbunden ist.

12. Vorrichtung nach einem der vorstehenden Ansprüche, **gekennzeichnet durch** ein Rückschlagventil (5) und eine Doppelschaltfiltereinrichtung (11a/11b) im Bereich der Materialzuführung zur Applikationseinheit (A).

13. Vorrichtung nach einem der vorstehenden Ansprüche, **dadurch gekennzeichnet, dass** die Steuereinheit die Ansaug-/Abgabemenge des Behandlungsmittels sowie den Betriebsdruck überwacht und regelt.

14. Vorrichtung nach Anspruch 13, **dadurch gekennzeichnet, dass** die Steuereinheit hinsichtlich Vorschublänge, Vorschubgeschwindigkeit und/oder Rückfahrgeschwindigkeit des Behandlungsschlauchs programmierbar ist.

15. Verwendung der Vorrichtung eines der Ansprüche 1 bis 14 zur Reinigung und/oder Beschichtung der Innenwandung von Kühlmittelrohren und industriellen Versorgungsrohren.

16. Verwendung nach Anspruch 15 zur Innenreinigung von Rohren mit Wasser als Reinigungsmedium mit einem Druck von 1.500 bis 2.500 bar.

17. Verwendung nach Anspruch 15 zur Innenbeschichtung von Rohren mit einem aushärtenden Kunststoffmaterial.

## Claims

1. Device for the internal treatment of pipes, in particular for coolant tubes of steam condensers and heat exchangers, comprising a supply unit (V) for feeding and conveying treatment media, an application unit (A) to apply the treatment media fed in by the supply unit, as well as a control unit to monitor and control the supplied treatment media and the application of treatment media to the inner wall of the pipes, wherein the application unit (A) is provided with a guiding hose (21) through which an application hose (18) extends designed so as to be inserted into the pipe to be treated, said application hose (18) terminating in a nozzle,
**characterized in that,** the application hose (18) can be wound up in a single layer on a driven reel (17) and secured on the reel (17) by means of tensioning belts, the application hose (18) is capable of moving forward and back via guide rollers (27) arranged on a traversing carriage (55), the guide rollers (27) are powered by a drive (24) operating synchronously with the drive (19) of the reel (17), and the traversing carriage (55) moves parallelly to the reel axis relative to the extended position of the application hose (18).

2. Device according to claim 1, **characterized in that** the reel (17) is designed to be brought to a standard temperature.

3. Device according to claim 2, **characterized in that** the reel (17) is provided with a heating/cooling water supply system.

4. Device according to any one of the claims 1 to 3, **characterized in that** the reel (17) is provided with a guiding system for the application hose (18.

5. Device according to any one of the above claims, **characterized in that** the tensioning belts are movably guided via rollers (56).

6. Device according to claim 5, **characterized in that** the tensioning belts are moved as a result of frictional contact with the application hose (18) when the reel (17) is rotating.

7. Device according to any one of the above claims, **characterized in that** the tensioning belts embrace more than 270° of the circumference of the reel.

8. Device according to any one of the above claims, **characterized in that** the application hose (18) is a high-pressure hose having a pressure resistance of up to 2,500 bar.

9. Device according to any one of the above claims, **characterized in that** the application hose (18) can be controllably extended and retracted over the entire length of the pipe to be treated.

10. Device according any one of the above claims, **characterized in that** the application hose (18) is equipped with a coating nozzle designed so as to enable coating to be effected during return travel, wherein the spraying angle amounts to between 60° and 120° in relation to the longitudinal direction of the pipe to be treated.

11. Device according to any one of the above claims, **characterized in that** the supply unit (V) is provided with an intake hose (2) equipped with a coarse filter, said hose being connected with a backpressure-dependently operating supply pump (3).

12. Device according to any one of the above claims, **characterized by** a non-return valve (5) and a dual filtering system (11a/11b) in the area where material is supplied to the application unit (A).

13. Device according to any one of the above claims, **characterized in that** the control unit monitors and controls the intake/discharge volume of the treatment agent as well as the operating pressure.

14. Device according to claim 13, **characterized in that** the control unit is programmable with respect to feed length, feed speed, and/or retraction speed of the application hose.

15. Use of the device in accordance with any one of the claims 1 to 14 for cleaning and/or coating the inner wall of coolant pipes and industrial supply pipes.

16. Use according to claim 15 for the internal cleaning of pipes with water as cleaning medium at a pressure of between 1,500 and 2,500 bar.

17. Use according to claim 15 for the internal coating of pipes with a hardening plastic material.

## Revendications

1. Dispositif de traitement intérieur de tubes, en particulier de tubes de fluide de refroidissement de condensateurs de vapeur et d'échangeurs thermiques, comportant une unité d'alimentation (V) destinée à amener et conduire un matériau de traitement, une unité d'application (A) destinée à appliquer le matériau de traitement amené par l'unité d'alimentation ainsi qu'une unité de commande destinée à surveiller et commander l'alimentation en matériau de traitement et l'application du matériau de traitement sur les parois intérieures des tubes, l'unité d'application (A) possédant un flexible de guidage (21) doté d'un flexible d'application (18) qui est guidé dans le flexible de guidage (21), qui peut être introduit dans le tube à traiter et qui se termine par une buse, **caractérisé en ce que** le flexible d'application (18) peut être enroulé sur une couche sur un tambour (17) entraîné et peut être fixé sur le tambour (17) à l'aide de sangles, peut être avancé et reculé par des galets de guidage (27) disposés sur un chariot (55), les galets de guidage (27) possèdent un entraînement (29) qui est synchronisé avec l'entraînement (19) du tambour (17), et le chariot (55) peut se déplacer parallèlement à l'axe du tambour en fonction de l'état de déroulement du flexible d'application (18).

2. Dispositif selon la revendication 1, **caractérisé en ce que** le tambour (17) est conçu pouvant être tempéré à une température standard.

3. Dispositif selon la revendication 2, **caractérisé en ce que** tambour (17) est équipé d'une alimentation en eau de chauffage/de refroidissement.

4. Dispositif selon l'une quelconque des revendications 1 à 3, **caractérisé en ce que** le tambour (17) présente un guide pour le flexible d'application (18).

5. Dispositif selon l'une quelconque des revendications précédentes, **caractérisé en ce que** les sangles sont guidées de façon mobile au moyen de galets (56).

6. Dispositif selon la revendication 5, **caractérisé en ce que** les sangles sont mobiles par l'intermédiaire du frottement du flexible d'application (18) (18) avec le tambour en rotation (17).

7. Dispositif selon l'une quelconque des revendications précédentes, **caractérisé en ce que** les sangles couvrent plus de 270° de la circonférence du tambour.

8. Dispositif selon l'une quelconque des revendications précédentes, **caractérisé en ce que** le flexible d'application (18) est un flexible haute pression avec une résistance à la compression allant jusqu'à 2 500 bars.

9. Dispositif selon l'une quelconque des revendications précédentes, **caractérisé en ce que** le flexible d'application (18) est commandé pouvant être avancé et reculé sur toute la longueur du tube à traiter.

10. Dispositif selon l'une quelconque des revendications précédentes, **caractérisé en ce que** le flexible d'application (18) comporte une buse d'enduction, qui est conçue pour l'application lors du recul, dans lequel l'angle de pulvérisation est de 60° à 120° par rapport à la direction longitudinale du tube à traiter.

11. Dispositif selon l'une quelconque des revendications précédentes, **caractérisé en ce que** le dispositif d'alimentation (V) présente un flexible d'aspiration (2) muni d'un filtre grossier, qui est relié à une pompe de refoulement (3) fonctionnant en fonction d'une contre-pression.

12. Dispositif selon l'une quelconque des revendications précédentes, **caractérisé par** un clapet anti-retour (5) et un dispositif de filtrage à deux arbres (11a/11b) dans la zone du flux de matériau vers l'unité d'application (A).

13. Dispositif selon l'une quelconques des revendications précédentes, **caractérisé en ce que** l'unité de commande surveille et régule la quantité d'aspiration/d'évacuation de l'agent de traitement, ainsi que la pression de fonctionnement.

14. Dispositif selon la revendication 13, **caractérisé en ce que** l'unité de commande peut être programmée concernant la longueur d'avance, la vitesse d'avance et/ou la vitesse de recul du flexible de traitement.

15. Utilisation du dispositif selon l'une quelconque des revendications 1 à 14 pour le nettoyage et/ou l'enduction de la paroi interne de tubes de refroidissement et de tubes d'alimentation industriels.

16. Utilisation selon la revendication 15 pour le nettoyage de l'intérieur de tubes avec de l'eau comme fluide de nettoyage, à une pression de 1 500 à 2 500 bars.

17. Utilisation selon la revendication 15, pour l'enduction de l'intérieur de tubes avec une matière plastique durcissante.
